# EUROPÄISCHE PATENTSCHRIFT

(11) **EP 0 921 229 B1**
(45) Veröffentlichungstag und Bekanntmachung des Hinweises auf die Patenterteilung: **20.10.2004**
(21) Anmeldenummer: 98123123.6
(22) Anmeldetag: 04.12.1998
(51) Int. Cl.: D21G 1/02

(54) **Elastische Walze für eine Kalanderanordnung**
Soft roll for a calender
Rouleau mou pour un calandre

(30) Priorität: 05.12.1997 DE 29721509 U
(43) Veröffentlichungstag der Anmeldung: 09.06.1999
(73) Patentinhaber: Eduard Küsters Maschinenfabrik GmbH & Co. KG, 47805 Krefeld (DE)
(72) Erfinder: Brendel, Bernhard Dr., 47929 Grefrath (DE); Svenka, Peter Dr., 47929 Grefrath (DE)
(74) Vertreter: Sparing - Röhl - Henseler Patentanwälte

(56) Entgegenhaltungen:
- EP-A- 0 735 288
- EP-A- 0 828 029

## Beschreibung

Die Erfindung betrifft eine elastische Walze für eine Kalanderanordnung mit den im Oberbegriff des Anspruchs 1 genannten Merkmalen.

Eine Kalanderanordnung mit harten und elastischen Walzen, die normalerweise in einem Stapel übereinander angeordnet und zum Umlauf antreibbar sind, dient der Behandlung einer Warenbahn, die die zwischen jeweils zwei Walzen gebildeten Arbeitsspalte oder "Nips" durchläuft. Meist ist ein Teil der Walzen beheizt, und auf die Warenbahn wirkt Umformungsarbeit, bewirkt durch die Beheizung und die Flächenpressung in den Nips.

Dabei ist aus DE-PS 624 028 bekannt, daß der Walzenkörper von einer massiven Walze gebildet werden kann, die mit einem Außenmantel aus einem elastischen Material überzogen ist.

Aus EP 0 735 288 A1 ist eine Kalanderwalze bekannt, die einen zylindrischen Basiskörper und einen Bezug aus einem elastischen Material besitzt. Zwischen dem zylindrischen Basiskörper und dem Bezug ist ein Zwischenraum vorgesehen, in dem eine Stützkonstruktion angeordnet ist, die die Belastungskräfte vom Bezug auf den Basiskörper überträgt. Die Stützkonstruktion kann dabei wenigstens teilweise aus Leichtmetall bestehen und wird aufgebaut aus einer Vielzahl von Einzelelementen in Form von ringförmigen Ronden, die in der Mitte ein zentrisches Loch zur Aufnahme des Basiskörpers besitzen.

Aus EP 0 828 029 A2 ist eine Kalanderwalze bekannt, die aus einem zylindrischen Basiskörper besteht. Auf dem Basiskörper sind Stützzylinder aufgesetzt. Diese Stützzylinder liegen am Basiskörper an und sind von Kühlmittelkanälen durchsetzt.

Die Flächenpressung in den Nips wird durch äußere Anstellkräfte und/oder durch die Ansteuerung hydrostatisch abgestützter Durchbiegungseinstellwalzen aufgebracht. Bei der vertikalen Anordnung des Walzenstapels kommt die Gewichtsbelastung durch die Walzen hinzu.

Die systematische Weiterentwicklung von elastischen Kunststoff-Walzenbezügen in den letzten 10 Jahren hat den erfolgreichen Einsatz von kunststoffbezogenen Kalanderwalzen in den Multi Nip Kalandem ermöglicht. Durch ihre technisch/technologische Eignung haben sie ihre klassischen Vorgänger - die aus Fasermaterial bestehenden Walzenbezüge - bei Neuinstallationen vollkommen ersetzt.

Um die durchmesserabhängigen Eigengewichte der kunststoffbezogenen Kalanderwalzen zu reduzieren, werden hohlzylindrische Walzenkerne als Träger der Kunststoffbezüge verwendet. Unvermeidbar ist jedoch die Ovalisierung dieser hohlzylindrischen Stahlkeme unter Last im inneren Bereich, wobei die Walzenzapfen bzw. Flansche an den Enden der Stahlkerne diese Verformung unterbinden. Dadurch wird an den Walzenrändem ein unerwünschter Anstieg der Druckspannung hervorgerufen, der die Gleichmäßigkeit der Streckenlastverteilung über die Walzenbreite und ihre Steuerbarkeit negativ beeinflußt. Damit verbunden ist eine örtliche Verpressung der Papierbahn und eine lokale Überlastung der Walzenbezüge, die im Extremfall zu deren Zerstörung im Randbereich führen kann. Die Ovalisierung verursacht außerdem eine ständige ungünstige Wechselbeanspruchung des Stahlkerns und des Kunststoffbezuges.

Aufgabe der Erfindung ist es daher, eine elastische Walze für einen Multinip-Kalander zu schaffen, die unter der Einwirkung der Linienlasten im Nip keine ovale Deformation über ihre Gesamtlänge erfährt. Außerdem ist es erforderlich, daß das Eigengewicht dieser Walze möglichst klein gehalten wird, um den Streckenlastzuwachs aus diesem Eigengewicht auf ein Minimum zu reduzieren.

Diese Aufgabe wird durch die Merkmale des kennzeichnenden Teils des Anspruchs 1 gelöst.
Hierdurch wird eine elastische Walze geschaffen, die durch eine Verwendung einer Mehrzahl einzelner Walzenkörpersegmente aus einem Leichtmetall den Aufbau eines formstabilen Walzenkörpers ermöglicht, der durch seinen Verformungswiderstand jegliche radiale Deformation unterbindet. Dadurch, daß der Walzen-körper aus Leichtmetall hergestellt ist, wird eine Gewichtseinsparung erreicht.

Die verspannte axiale Aneinanderreihung der Walzenkörpersegmente führt zu einer radial verformungssteifen Walze mit hoher Rundlaufstabilität, die ohne einen stützenden Walzenkern auskommt. Die einzelnen Walzenkörpersegmente besitzen selbst jeweils eine hohe Eigenfestigkeit und radiale Steifigkeit und bilden damit tragfähige Einzelkörper, die axial miteinander verbunden sind, die für einen Walzenkörper notwendige Längserstreckung ergeben. Der Walzenkörper wird also von einer additiven Aneinanderreihung einheitlicher Segmente gebildet, die axial mit-einander verbunden sind.

Eine weitere Gewichtsersparnis kann dadurch erreicht werden, daß die Segmente eine wählbare Gestalt aufweisen können, wobei Querschnittsverkleinerungen zur Walzenkörpermitte hin die Ausbildung von Freiräumen zwischen benachbarten Segmenten erlauben. Die Segmente können Träger steter Festigkeit nachahmen, wodurch die radiale Steifigkeit unvermindert besteht. Das Gewicht der Walze kann auf diese Weise weiter verringert werden.

Die Segmente können ferner ineinandergreifend ausgebildet werden, um eine radiale Zentrierung an den Segmenten selbst einstellen zu können. Die Segmente können dann mit Abstand zu einem Spannanker verspannt sein.

Die Segmente können auch durch Anlage an mindestens einem Spannanker alleine oder zusätzlich justiert werden. Die Justierung soll das periphere Fluchten der Segmente sicher-stellen. Um eine Feinbearbeitung der Anlageflächen zu vermeiden, kann ein Paßsitz zwischen Segmenten und Spannanker über eine elastomere oder aus einem aushärtbaren Harz bestehende Zwischenschicht erreicht werden. Dadurch sind auch unbearbeitete Gußteile als Segmente einsetzbar. Dies senkt die Herstellungskosten der Segmente.

Die erfindungsgemäße Walze wird vorzugsweise als eine mittlere Walze in einem Kalanderstapel eingesetzt.

Zum Temperieren der Walze können die Segmente Kanäle für ein Ein- und Ausleiten eines Fluids aufweisen. Diese Kanäle können kommunizieren mit zwischen den Segmenten ausbildbaren Freiräumen, so daß eine größere Austauschfläche für eine Temperierung einer Walze zur Verfügung steht. Bei dieser Konstruktion wird das Temperierungsfluid beim Rotieren der erfindungsgemäßen Walze durch die Walze gefördert. Werden zudem Freiräume zwischen den Segmenten ausgebildet, in denen Rippen angeordnet sind, wird durch das Rotieren der Walze ein Fördereffekt erzeugt, der die Zirkulation des Temperierungsfluids unterstützt.

Als Leichtmetall bieten sich Aluminiumlegierungen, aber auch Magnesiumlegierungen an. Verwendet man Aluminiumlegierungen, so wird man versuchen, marktgängiges Halbzeug in lieferbaren Dimensionen zu verwenden. In einem solchen Fall kann man mit Vorteil mehrere Teile als Walzenkörpersegmente stirnseitig zentriert und aufeinanderfolgend mittels eines zentralen Spannankers verbinden.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

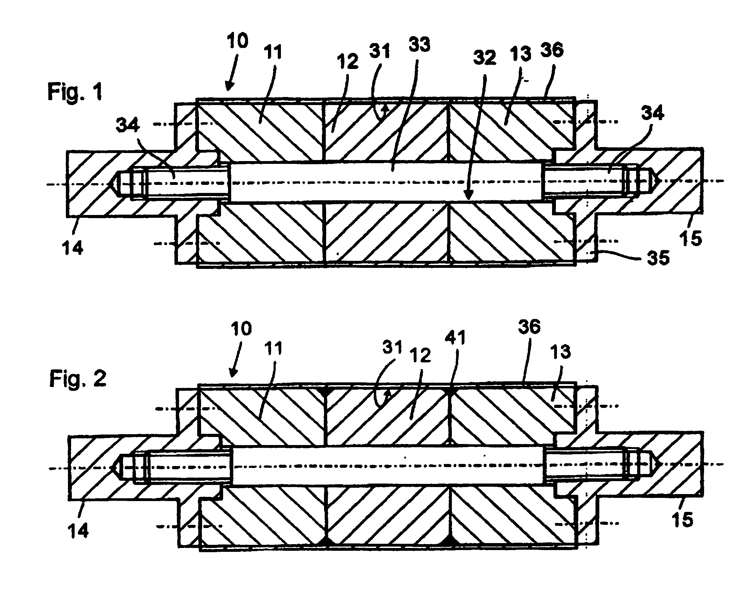

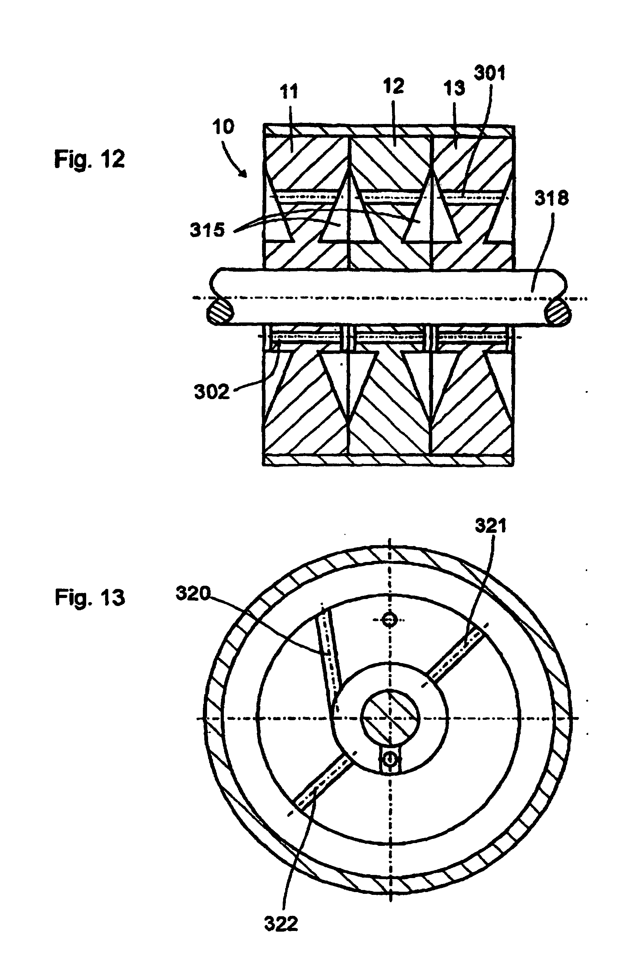

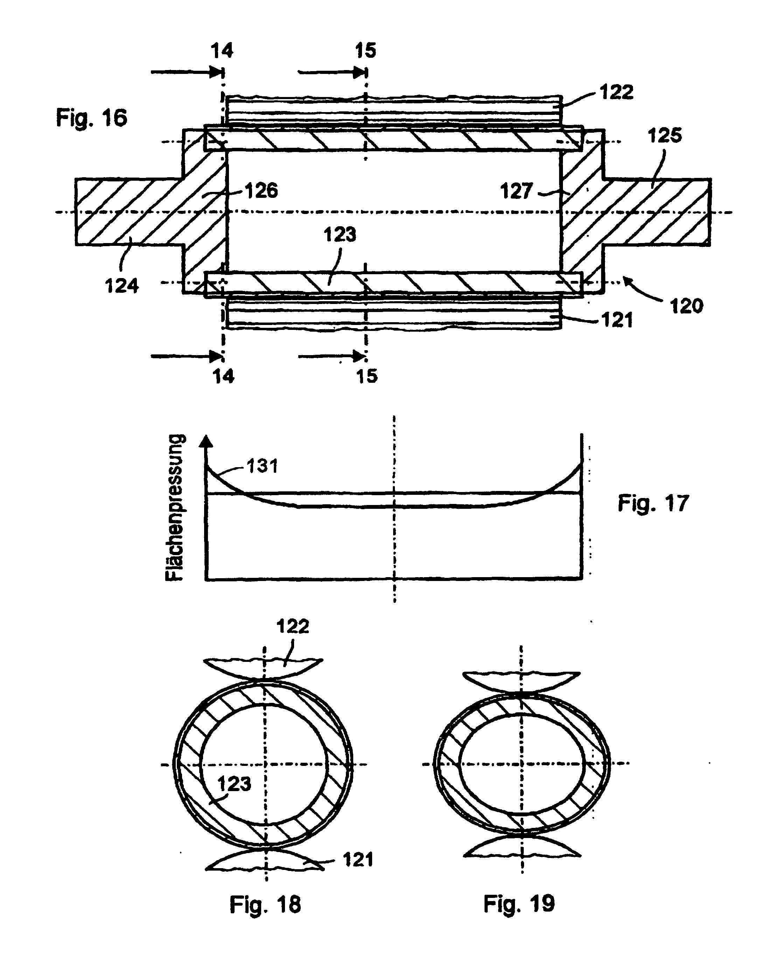

Die beigefügten Figuren 1 bis 12 und 14, 15 zeigen jeweils ganz oder teilweise im Axialschnitt Ausführungsbeispiele erfindungsgemäßer Walzen, während Figuren 16 bis 19 eine bekannte ovalisierende Walze darstellen. Fig. 13 zeigt die Seitenansicht eines Querschnitts der erfindungsgemäßen Walze gemäß Fig. 12.

Fig. 1 zeigt eine elastische Walze 10 für eine Kalanderanordnung zur Behandlung einer Warenbahn, insbesondere einer Papierbahn oder Textilbahn, mit einem formstabilen bzw. radial steifen Walzenkörper 31, der aus einzelnen axial aneinanderliegenden scheibenförmigen Walzenkörpersegmenten 11, 12, 13 besteht, die jeweils von einer Zentrierbohrung 32 durchsetzt sind. Der Walzenkörper 31 bildet den Kern der Walze 10. Die Segmente 11, 12, 13 sind dabei axial aneinandergereiht verspannt, wozu mindestens ein Spannanker 33 vorgesehen sein kann. Gemäß Fig. 1 ist ein mittiger Spannanker 33 vorgesehen, der in die Zentrierbohrungen 32 der Segmente 11, 12, 13 einsetzbar ist.

Die scheibenförmigen Walzenkörpersegmente 11, 12, 13 sind abgesehen von der Zentrierbohrung 32 radial steife Einzelkörper aus einem Leichtmetall, wobei seitliche Außenflächen benachbarter Segmente 11, 12 oder 12, 13 bündig aneinanderliegen. Die Anzahl aneinanderreihbarer Segmente ist wählbar. Gemäß Fig. 1 sind drei Segmente 11, 12, 13 vorgesehen. Die Segmente 11, 12, 13 zusammen bilden den Kern der Walze 10.

Der Walzenkörper 31 weist einen Außenmantel aus einem elastischen Material auf, bei dem es sich vorzugsweise um eine elastische Beschichtung 36 handelt.

Der Spannanker 33 ist endseitig mit Bolzengewinden 34 versehen, so daß sie in mit Muttergewinden versehene Zapfenbauteile 35 eingeschraubt werden können. Die Zapfenbauteile 35 bilden endseitige Lagerzapfen 14, 15 der Walze 10. Die Zapfenbauteile 35 in Verbindung mit dem Spannanker 33 stellen eine axiale Verbindung der Segmente 11, 12, 13 sicher.

Um jegliche Mikrobewegungen der Segmente 11, 12, 13 relativ zueinander zu unterbinden, was zu vorzeitigem Verschleiß der elastischen Beschichtung 36 führen kann, ist deshalb bei dem Ausführungsbeispiel gemäß Figur 2 vorgesehen, daß die Segmente 11, 12, 13 längs ihrer aneinandergrenzenden Peripherie mit Schweiß-nähten 41 versehen sind. Danach kann natürlich der Walzenkörper 31 sauber überdreht werden, bevor er die elastische Beschichtung 36 erhält.

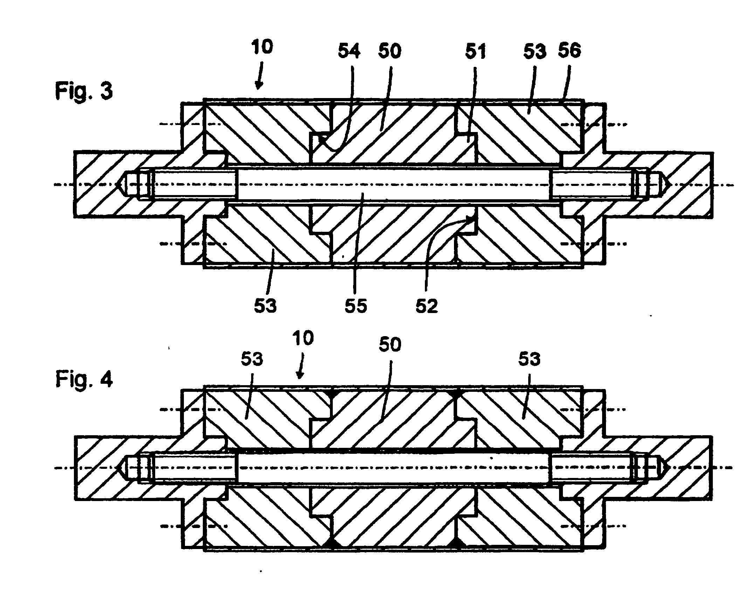

Die Ausführungsform nach Figur 3 unterscheidet sich von der Walze 10 nach Figur 1 dadurch, daß ein mittleres Segment 50 Zentrierbünde 51 aufweist, die in dazu komplementäre Ausschnitte 52 der äußeren Segmente 53 eingefügt sind. Da die zentrierenden Flächen 54 auf größerem Durchmesser liegen, ist die Zentriergenauigkeit wesentlich verbessert. Der Zuganker 55 hat hier keine Zentrierfunktion mehr, sondern erstreckt sich durch axiale Durchgangsbohrungen der Segmente 50 und 53, vorzugsweise mit Abstand zu diesen. Jegliche Art von ineinandergreifenden Zentrierbünden ist geeignet, um die seitlichen Anlageflächen benachbarter Segmente 50, 53 zueinander zu justieren. Ein elastischer Bezug 56 als Außenmantel ist vorgesehen, wie bereits beschrieben.

Trotz verbesserter Zentrierung kann man auch bei dieser Ausführungsform die Segmente 50, 53 peripher verschweißen, wie in Figur 4 gezeigt.

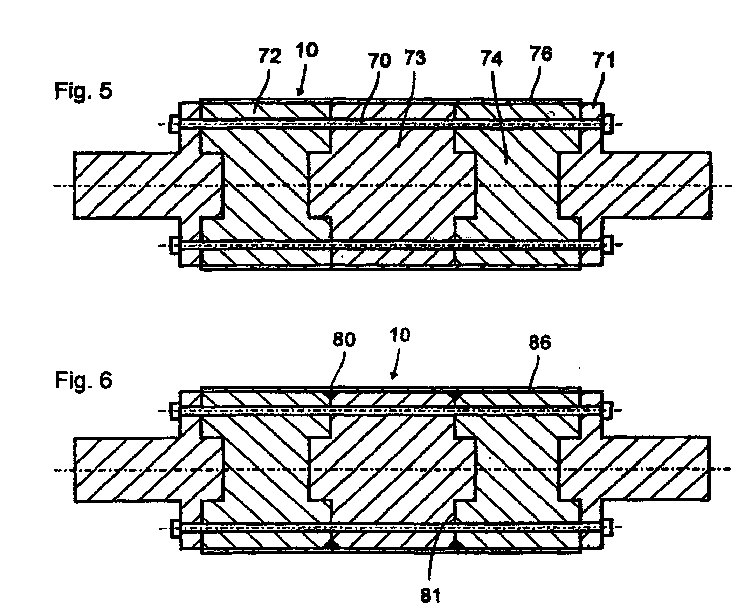

Bei der in Figur 5 dargestellten Bauart ist der zentrale Zuganker der Figuren 1 und 3 durch eine Mehrzahl von in Umfangsrichtung gleichmäßig verteitten Zugankem 70 ersetzt, die Bohrungen der Flansche 71 und der Segmente 72, 73 und 74 durchsetzen. Ein elastischer Walzenbezug 76 ist ebenfalls vorgesehen.

Auch bei dieser Ausführungsform kann man die Segmente mit peripheren Schweißnähten 80 versehen, wie in Figur 6 gezeigt, oder an den Stirnseiten 81 ganzflächig kleben.

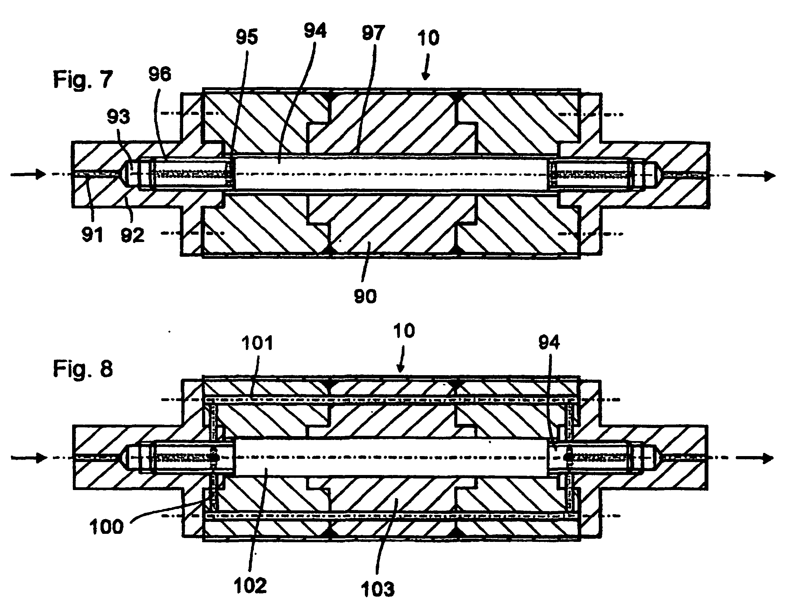

Ausgehend von der Ausführungsform nach Figur 6 ist die Variante nach Figur 7 so ausgebildet, daß ein Heiz- oder Kühlfluid in Kontakt mit dem Walzenkörper 90 gebracht werden kann. Die Zufuhr erfolgt über eine vorzugsweise koaxiale Bohrung 91 des Lagerzapfens 92 in den Raum 93 zwischen Zapfen 92 und Zuganker 94, von dort über Querbohrungen 95 in den Ringraum 97 zwischen dem Segment 90 und dem Zuganker 94, der mit Gewinde 96 versehen ist. Das Fluid kann am anderen Lagerzapfen über analog gestaltete Räume und Bohrungen wieder abfließen.

In einer Variante nach Figur 8 erfolgt die Fluidführung durch sternförmig angeordnete radiale Bohrungen 100 und achsparallele Bohrungen 101, in die die Bohrungen 100 münden. Hier kann ein Zylinder 102 einen Bypass zwischen Zuganker 94 und Walzenkörper 103 sperren.

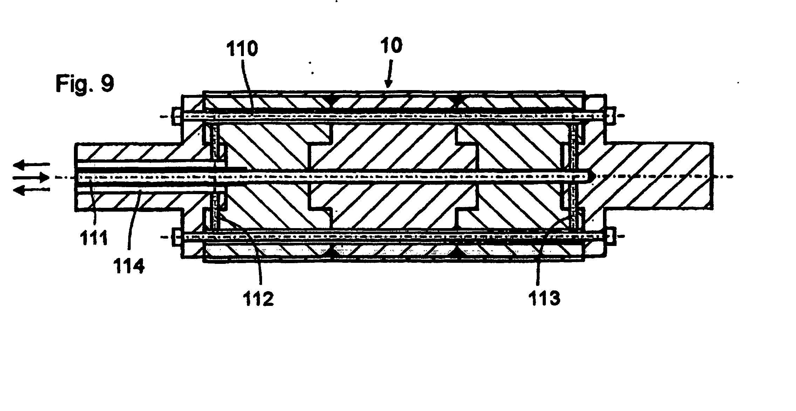

In einer Ausführungsform nach Figur 9 sind ähnlich wie in Figur 6 mehrere in gleichem Achsabstand und Umfangsabstand verteilte Zuganker 110 vorgesehen, und das Temperierfluid durchströmt die von den Zugankem durchsetzten Bohrungen. Die Zuleitung erfolgt über eine zentrale Bohrung 111 und über sternförmig angeordnete Radialbohrungen 113; der Ablauf erfolgt über entsprechende sternförmig angeordnete Radialbohrungen 112 in einen Ringraum 114.

Es versteht sich, daß die Zeichnungen weitgehend schematisiert sind und Dichtungen, Drehdurchführungen und dergleichen weggelassen sind.

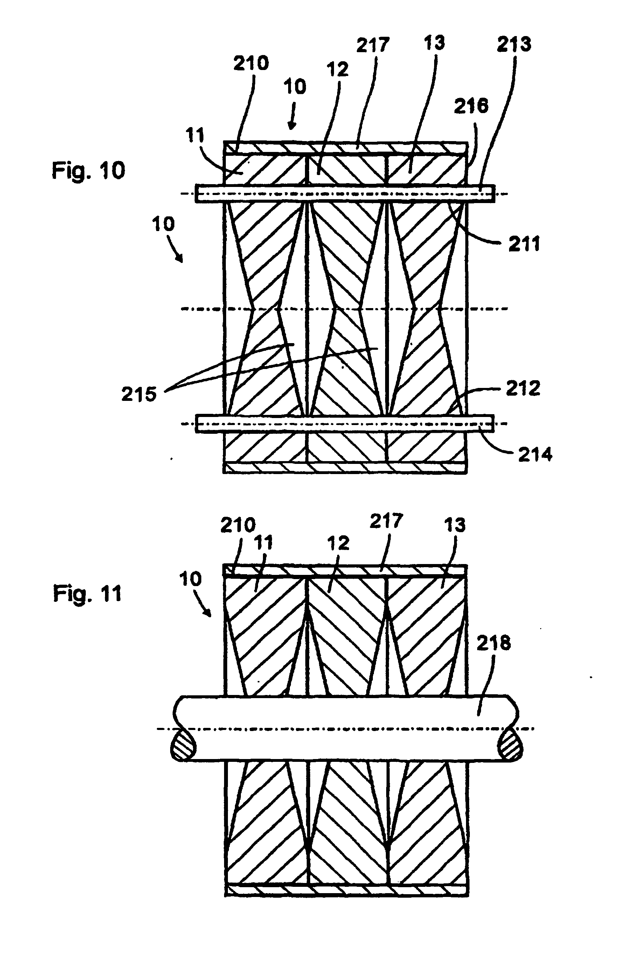

Fig. 10 zeigt ein weiteres Ausführungsbeispiel einer teilweise dargestellten Walze 10 mit einem Walzenkörper 210 aus einzelnen axial verspannten Segmenten 11, 12, 13. Die Segmente 11, 12, 13 sind radial steife Einzelkörper mit mindestens zwei randseitig vorgesehen Zentrierbohrungen 211, 212, durch die jeweils ein Spann-anker 213, 214 geführt ist. Das Spannmittel selbst ist in bekannter Weise ausbildbar.

Die Segmente 11, 12, 13 besitzen einen zur Walzenmitte hin sich verjüngenden Querschnitt, wodurch benachbarte Segmente 11, 12, 13 Freiräume 215 einschließen. Die Querschnittsverjüngung beginnt vorzugsweise erst nach einem wählbaren Randabschnitt 216, entlang dem die Segmente 11, 12, 13 bündig anliegen. Die Gestalt der Segmente 11, 12, 13 ahmt vorzugsweise die Gestalt eines Trägers steter Festigkeit nach. Ein elastischer Bezug 217 ist wiederum als Außenmantel vorgesehen.

Alternativ zu den Spannmitteln 213, 214 kann, wie in Fig. 11 gezeigt, ein zentraler Spannanker 218 vorgesehen sein, wie bereits zuvor beschrieben.

Fig. 12 zeigt eine weitere Ausbildung einer Walze 10 mit axial verspannten Segmenten 11, 12, 13, die zusätzlich zu einer Querschnittsverjüngung gemäß Fig. 10 eine benachbart zur Achsenmitte ausgebildete Querschnittsverbreiterung aufweisen, um benachbart zu dem Spannanker 318 wieder eine bündige Anlage der seitlichen Kontaktflächen der benachbarten Segmente 11, 12, 13 zu erhalten. Dies verbessert die Justierung, andererseits verbleiben Freiräume 315 zwischen verspannten Segmenten 11, 12, 13, mit dem Ergebnis einer Gewichtsreduzierung der Walze 10.

Beispielhaft in Fig. 13 ist dargestellt, daß bei der Ausführungsform gemäß Fig. 12 in den Freiräumen 315 Rippen 320, 321, 322 vorgesehen sein können, die beim Rotieren der Walze 10 nach Art einer Förderpumpe arbeiten. Ferner können Kanäle 301, 302 vorgesehen sein in den Segmenten 11, 12, 13, wie dies beispielhaft in Verbindung mit Fig. 8 dargestellt ist. Diese Kanäle 301, 302 kommunizieren vorzugsweise mit den Freiräumen 315.

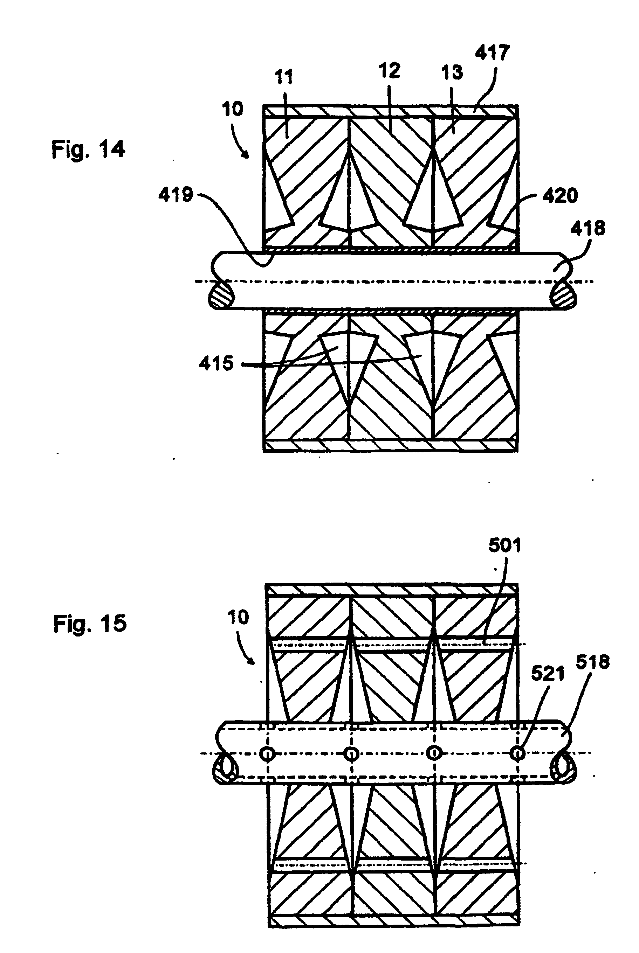

Fig. 14 zeigt ein weiteres Ausführungsbeispiel einer Walze 10, bei dem die Segmente 11, 12, 13 über eine ausgleichende Zwischenschicht 419 auf einem zentralen Spannanker 418 justiert werden. Die Zwischenschicht 419 kann beispielsweise von einem Elastomer oder einem gehärteten Epoxidharz gebildet werden. Diese Zwischenschicht verhindert mögliche Schwingungen oder Verlagerungen des Zugankers beim Betrieb der Walze. Ferner ist eine abgewandelte Gestalt der Segmente 11, 12, 13 dargestellt, in dem die achsenseitige Querschnittsverbreiterung eine Profillinie 420 aufweist. Ein elastischer Bezug 417 ist in bekannter Weise aufgebracht.

Fig. 15 zeigt eine weitere Ausführungsform einer Walze 10, bei der der Spannanker 518 in ein Kommunikationssystem für das Ein- und Ausleiten eines Fluids mit Kanälen 501 in den Segmenten 11, 12, 13 integriert ist. Der Spannanker 518 umfaßt beispielsweise ein durchströmbares Rohr mit einzelnen Durchtrittsöffnungen 521.

Mit besonderem Vorteil für die Steuerung der Zufuhr der Wärmeenergie im Nip werden wärmeleitfähige elastische Walzenbezüge 36, 56, 76, 86 verwendet.

Zum Vergleich mit dem Stand der Technik ist in den Figuren 16 bis 19 eine herkömmliche "weiche" Walze 120 zwischen zwei "harten" Walzen 121, 122 wiedergegeben. Sie umfaßt einen rohrförmigen Stahlkern 123, in dessen Enden je eine Zapfenanordnung 124, 125 eingefügt ist. Figuren 18 bzw. 19 sind Schnitte nach Linie 14-14 bzw. 15-15 der Figur 16, und man erkennt, daß sich die Walze in ihrem mittleren Teil oval deformiert, während sie nahe ihren Enden durch die Flansche 126 bzw. 127 der Zapfenanordnungen ausgesteift ist und keine Ovalisierung eintritt. Dieser Effekt ist nicht nur nachteilig wegen der ständigen Deformation des Kerns 123 und des Bezugs 128, sondern führt auch zu einer ungleichförmigen Flächenpressung, wie in Figur 13, Linie 131, dargestellt, mit der Folge, daß die durchlaufende Bahn an ihren Rändern einer höheren Belastung ausgesetzt wird als im mittleren Bereich. Hier muß also der Konstrukteur einen Kompromiß zwischen dem Walzengewicht einerseits, der Deformierbarkeit andererseits eingehen.

Im Gegensatz dazu hat es sich bei den erfindungsgemäßen Walzen gezeigt, daß bei normalen Belastungen die Ovalisierung unter der Nachweisgrenze liegt.

## Patentansprüche

1. Elastische Walze (10) für eine Kalanderanordnung zur Behandlung einer Papier- oder Textilbahn mit einem zylindrischen Walzenkörper (31, 90, 103, 210), der endseitig Lagerzapfen (14, 15; 92) aufweist und mit einem Außenmantel aus einem elastischen Material (36, 56, 76, 86, 217, 417) überzogen ist, und wobei der Walzenkörper (31, 90, 103, 210) eine Mehrzahl einzelner Walzenkörpersegmente (11, 12, 13; 50, 53, 72, 73, 74) aufweist, die als tragfähige Einzelkörper aus einem Leichtmetall gebildet und axial aneinandergereiht verspannt sind, **dadurch gekennzeichnet, daß** der Walzenkörper (31, 90, 103, 210) den Kern der Walze (10) bildet.

2. Elastische Walze nach Anspruch 1, **dadurch gekennzeichnet, daß** jeweils zwei durch Verspannen verbundene Walzenkörpersegmente (50, 53; 72, 73, 74) an ihren seitlichen Anlageflächen über eine ineinandergreifende Zentrierverbindung zueinander justierbar sind.

3. Elastische Walze nach Anspruch 1 oder 2, **dadurch gekennzeichnet, daß** die in Axialrichtung aufeinanderfolgenden Walzenkörpersegmente (11, 12, 13; 50, 53; 72, 73, 74) von mindestens einem Spannanker (33; 55, 94, 102, 218, 318, 418, 518) zusammengehalten sind.

4. Elastische Walze nach einem der Ansprüche 1 bis 3, **dadurch gekennzeichnet, daß** die Walzenkörpersegmente (72, 73, 74) Kanäle (70) zum Ein- und Ableiten eines temperierenden Fluids aufweisen.

5. Elastische Walze nach einem der Ansprüche 1 bis 4, **dadurch gekennzeichnet, daß** die Walzenkörpersegmente (11, 12, 13) als radial steife Tragkörper mit zur Walzenachse hin sich jeweils verjüngenden Querschnitt ausgebildet sind.

6. Elastische Walze nach Anspruch 5, **dadurch gekennzeichnet, daß** im Bereich der sich verjüngenden Abschnitte der Walzenkörpersegmente (11, 12, 13) Freiräume (215, 315) zwischen jeweils zwei aneinanderliegenden Walzenkörpersegmenten (11, 12, 13) verbleiben, die verbindbar sind mit in den Walzenkörpersegmenten (11, 12, 13) ausbildbaren Kanälen (301, 501) zum Ein- und Ausleiten eines temperierenden Fluids.

7. Elastische Walze nach Anspruch 5 oder 6, **dadurch gekennzeichnet, daß** im Bereich der sich verjüngenden Abschnitte der Walzenkörpersegmente Freiräume zwischen jeweils zwei aneinanderliegenden Walzenkörpersegmenten verbleiben, in denen Rippen (320, 321, 322) zur Förderung eines temperierenden Fluids ausbildbar sind.

8. Elastische Walze nach einem der Ansprüche 1 bis 7, **dadurch gekennzeichnet, daß** die Walzenkörpersegmente peripher miteinander verschweißt sind.

9. Elastische Walze nach einem der Ansprüche 1 bis 8, **dadurch gekennzeichnet, daß** die Walzenkörpersegmente (11, 12, 13) über einen axialen Zuganker (418) verspannt sind, der über eine ausgleichende Zwischenschicht (419) die Walzenkörpersegmente (11, 12, 13) zentriert.

10. Elastische Walze nach Anspruch 9, **dadurch gekennzeichnet, daß** die Zwischenschicht (419) von einem aushärtbaren Epoxidharz gebildet wird.

11. Elastische Walze nach einem der Ansprüche 1 bis 10, **dadurch gekennzeichnet, daß** die Walzenkörpersegmente (11, 12, 13) über mindestens einen Zuganker (518) verspannt sind, der als durchströmbarer Verteiler für ein temperierendes Fluid ausgebildet ist.

12. Elastische Walze nach einem der Ansprüche 1 bis 11, **dadurch gekennzeichnet, daß** als Leichtmetall eine Aluminiumlegierung vorgesehen ist.

## Claims

1. Resilient roll (10) for a calender arrangement for treating a paper or textile web, having a cylindrical roll body (31, 90, 103, 210) which has bearing journals (14, 15; 92) at the ends and is covered by an outer shell made from a resilient material (36, 56, 76, 86, 217, 417), and the roll body (31, 90, 103, 210) having a plurality of individual roll-body segments (11, 12, 13; 50, 53, 72, 73, 74) which are formed as supporting individual bodies made from a lightweight metal and are clamped axially in a row alongside one another, **characterized in that** the roll body (31, 90, 103, 210) forms the core of the roll (10).

2. Resilient roll according to Claim 1, **characterized in that** in each case two roll-body segments (50, 53; 72, 73, 74) which are connected to one another by clamping can be adjusted with respect to one another at their lateral contact surfaces by an interengaging centring connection.

3. Resilient roll according to Claim 1 or 2, **characterized in that** the roll-body segments (11, 12, 13; 50, 53; 72, 73, 74) which follow one another in the axial direction are held together by at least one tension bolt (33; 55, 94, 102, 218, 318, 418, 518).

4. Resilient roll according to one of Claims 1 to 3, **characterized in that** the roll-body segments (72, 73, 74) have ducts (70) for leading a temperature-control fluid in and away.

5. Resilient roll according to one of Claims 1 to 4, **characterized in that** the roll-body segments (11, 12, 13) are configured as radially rigid bearing bodies having a cross section which in each case tapers towards the roll axis.

6. Resilient roll according to Claim 5, **characterized in that** cavities (215, 315) remain in the region of the tapering sections of the roll-body segments (11, 12, 13) between in each case two roll-body segments (11, 12, 13) resting on one another, which cavities (215, 315) can be connected to ducts (301, 501) which can be formed in the roll-body segments (11, 12, 13) for leading a temperature-control fluid in and away.

7. Resilient roll according to Claim 5 or 6, **characterized in that** cavities remain in the region of the tapering sections of the roll-body segments between in each case two roll-body segments resting on one another, in which cavities ribs (320, 321, 322) can be formed to convey a temperature-control fluid.

8. Resilient roll according to one of Claims 1 to 7, **characterized in that** the roll-body segments are welded to one another peripherally.

9. Resilient roll according to one of Claims 1 to 8, **characterized in that** the roll-body segments (11, 12, 13) are clamped via an axial tie rod (418) which centres the roll-body segments (11, 12, 13) via a compensating intermediate layer (419).

10. Resilient roll according to Claim 9, **characterized in that** the intermediate layer (419) is formed from a curable epoxy resin.

11. Resilient roll according to one of Claims 1 to 10, **characterized in that** the roll-body segments (11, 12, 13) are clamped by at least one tie rod (518) which is configured as a distributor through which a temperature-control fluid can flow.

12. Resilient roll according to one of Claims 1 to 11, **characterized in that** an aluminium alloy is provided as lightweight metal.

## Revendications

1. Rouleau élastique (10) pour un système de calandres pour le traitement d'une bande de papier ou de textile, comprenant un corps cylindrique (31, 90, 103, 210), qui comporte des tourillons (14, 15 ; 92) aux extrémités et est revêtu d'une chemise extérieure en matériau élastique (36, 56, 76, 86, 217, 417), et le corps du rouleau (31, 90, 103, 210) comportant une pluralité de segments (11, 12, 13 ; 50, 53, 72, 73, 74) qui sont conçus sous forme de corps séparés stables en métal léger et qui sont serrés en rang les uns à côté des autres dans le sens axial, **caractérisé en ce que** le corps du rouleau (31, 90, 103, 210) forme le noyau du rouleau (10).

2. Rouleau élastique selon la revendication 1, **caractérisé en ce que** respectivement deux segments du corps de rouleau (50, 53 ; 72, 73, 74), assemblés par serrage, peuvent être ajustés l'un à l'autre au niveau de leurs faces d'appui latérales par l'intermédiaire d'un assemblage centré emboîté.

3. Rouleau élastique selon la revendication 1 ou 2, **caractérisé en ce que** les segments du corps de rouleau (11, 12, 13 ; 50, 53 ; 72, 73, 74), juxtaposés dans le sens axial, sont maintenus les uns contre les autres par au moins un tirant (33 ; 55, 94, 102, 218, 318, 418, 518).

4. Rouleau élastique selon l'une quelconque des revendications 1 à 3, **caractérisé en ce que** les segments du corps de rouleau (72, 73, 74) comportent des canaux (70) pour l'admission et l'évacuation d'un fluide équilibrant la température.

5. Rouleau élastique selon l'une quelconque des revendications 1 à 4, **caractérisé en ce que** les segments du corps de rouleau (11, 12, 13) sont conçus sous forme de corps de support rigides avec une section se rétrécissant en allant vers l'axe du rouleau.

6. Rouleau élastique selon la revendication 5, **caractérisé en ce que**, dans la zone des tronçons rétrécis des segments du corps de rouleau (11, 12, 13), des espaces libres (215, 315) subsistent entre respectivement deux segments du corps de rouleau (11, 12, 13) en appui l'un contre l'autre, lesquels espaces peuvent communiquer avec des canaux (301, 501) ménagés dans les segments du corps de rouleau (11, 12, 13) pour l'admission et l'évacuation d'un fluide équilibrant la température.

7. Rouleau élastique selon la revendication 5 ou 6, **caractérisé en ce que**, dans la zone des tronçons rétrécis des segments du corps de rouleau, des espaces libres subsistent entre respectivement deux segments du corps de rouleau en appui l'un contre l'autre, dans lesquels espaces peuvent être réalisées des cannelures (320, 321, 322) pour le transport d'un fluide équilibrant la température.

8. Rouleau élastique selon l'une quelconque des revendications 1 à 7, **caractérisé en ce que** les segments du corps de rouleau sont soudés les uns aux autres par un cordon de soudure périphérique.

9. Rouleau élastique selon l'une quelconque des revendications 1 à 8, **caractérisé en ce que** les segments du corps de rouleau (11, 12, 13) sont maintenus serrés par un tirant (418) axial qui centre les segments du corps de rouleau (11, 12, 13) par l'intermédiaire d'une couche intermédiaire (419) compensatrice.

10. Rouleau élastique selon la revendication 9, **caractérisé en ce que** la couche intermédiaire (419) est formée par une résine époxy durcissable.

11. Rouleau élastique selon l'une quelconque des revendications 1 à 10, **caractérisé en ce que** les segments du corps de rouleau (11, 12, 13) sont maintenus serrés par l'intermédiaire d'au moins un tirant (518), qui est conçu sous forme de distributeur à travers lequel peut circuler un fluide équilibrant la température.

12. Rouleau élastique selon l'une quelconque des revendications 1 à 11, **caractérisé en ce que** le métal léger prévu est un alliage d'aluminium.
